# EUROPÄISCHE PATENTSCHRIFT

(11) **EP 0 868 332 B1**
(45) Veröffentlichungstag und Bekanntmachung des Hinweises auf die Patenterteilung: **22.03.2000**
(21) Anmeldenummer: 96942334.2
(22) Anmeldetag: 04.12.1996
(51) Int. Cl.: B60S 1/16

(54) **ANTRIEBSVORRICHTUNG FÜR EINEN SCHEIBENWISCHER**
DRIVE DEVICE FOR A WINDSCREEN WIPER
DISPOSITIF MOTEUR POUR ESSUIE-GLACE

(30) Priorität: 27.12.1995 DE 19548824
(43) Veröffentlichungstag der Anmeldung: 07.10.1998
(73) Patentinhaber: ITT Automotive Europe GmbH, 60488 Frankfurt am Main (DE)
(72) Erfinder: ADE, Rolf, D-74321 Bietigheim-Bissingen (DE); SCHEELE, Hubert, D-74189 Weinsberg (DE); WALTHER, Bernd, D-74321 Bietigheim-Bissingen (DE); CSERMAK, Martin, D-74321 Bietigheim-Bissingen (DE)
(74) Vertreter: Dreiss, Fuhlendorf, Steimle & Becker
(86) Internationale Anmeldenummer: EP9605403
(87) Internationale Veröffentlichungsnummer: WO9724245

(56) Entgegenhaltungen:
- EP-A- 0 359 227
- DE-U- 8 522 476
- FR-A- 2 698 942
- GB-A- 2 175 493

## Beschreibung

Die Erfindung bezieht sich auf eine Antriebsvorrichtung für einen Scheibenwischer gemäß dem Oberbegriff des Anspruchs 1.

Antriebsvorrichtungen für Scheibenwischer sind mit Schaltern versehen, die dafür sorgen, daß der Motor der Antriebsvorrichtung nach dem Öffnen des Hauptschalters durch den Fahrer noch so lange mit Strom versorgt wird, bis der Scheibenwischer wieder in seine Ausgangsposition gelangt ist, die auch als Parkstellung bezeichnet wird. Dementsprechend wird der Schalter Parkstellungsschalter genannt.

Üblicherweise werden die Parkstellungsschalter realisiert durch eine Schaltscheibe, die mehrere konzentrische, abschnittsweise unterbrochene Kontaktbahnen aufweist, wobei auf jeder Bahn ein punktförmiges Kontaktelement schleift, das eine elektrisch leitende Verbindung zur Kontaktbahn herstellt. Häufig sind die Kontaktbahnen fest auf dem Abtriebszahnrad der Abtriebswelle angeordnet, während die punktförmigen Kontakte an gehäusefesten Kontaktfedern ausgebildet sind.

Bei dieser Anordnung, bei der ein Element des Parkstellungsschalters fest mit der Abtriebswelle verbunden ist, tritt das Problem auf, daß das Scheibenwischerblatt durch äußere Einflüsse, z.B. durch Schnee auf der Windschutzscheibe daran gehindert werden kann, in seine Parkstellung zu gelangen. Da aber die Abtriebswelle so lange vom Motor angetrieben wird, bis sie eine Winkellage eingenommen hat, die der Parkstellung des Wischblattes bei ungehinderter Bewegung entspricht, wird der Wischarm und das Wischblatt bogenförmig verspannt, indem sie sich am Hindernis abstützen. Sobald der Motor selbsttätig abschaltet, bewirkt der sich entspannende Wischer, daß die Abtriebswelle zurückgedreht wird. Dies hat zur Folge, daß der Parkstellungsschalter erneut geschlossen und der Motor mit Strom versorgt wird. Dies führt dazu, daß der Wischer wieder gegen das Hindernis gefahren und erneut eine mechanische Spannung aufgebaut wird. Dieser Vorgang wiederholt sich so lange, bis das Hindernis beseitigt ist. Es ist ohne weiteres ersichtlich, daß dabei erhebliche Belastungen auf das Getriebe wirken, die die Lebensdauer des Getriebes herabsetzen.

In der DE 36 07 891 A1 wurde daher schon vorgeschlagen, ein Teil des Parkstellungsschalters nicht fest sondern über ein Kupplungselement mit der Abtriebswelle zu verbinden. Dabei sind die Kontaktbahnen fest im Gehäuse angeordnet und die punktförmigen Kontaktelement drehbar gelagert und über eine Kupplungseinrichtung mit der Abtriebswelle verbunden. Das Prinzip läßt sich aber auch dann anwenden, wenn die punktförmigen Kontaktelemente gehäusefest ausgebildet und die Kontaktbahnen auf einer Schaltscheibe ausgebildet sind, die drehbar im Gehäuse gelagert ist. In diesem Fall wird die Schaltscheibe über ein Kupplungselement mit der Abtriebswelle verbunden.

Die Kupplung ist derart ausgebildet, daß die Abtriebswelle im normalen Betrieb, bei dem der Wischer pendelnd angetrieben wird, die Schaltscheibe mitnimmt, so daß der Parkstellungsschalter wie ein Parkstellungsschalter, dessen Schaltscheibe fest mit der Abtriebswelle verbunden ist, arbeitet.

Wenn aber der oben erläuterte Fall eintritt, bei der die Abtriebswelle gegen ihre eigentliche Drehrichtung zurückgestellt wird, wird die Schaltscheibe nicht mitgenommen, so daß der Parkstellungsschalter, der den Motor anderfalls erneut mit Strom versorgen würde, nicht geschlossen wird.

Bei der gattungsgemäßen EP 359 227 A2 ist die Schalteinrichtung so aufgebaut, daß das drehbare Element auf einem mit dem Gehäusedeckel verbundenen Zapfen drehbar gelagert ist, wobei die Abtriebswelle an der Stirnfläche des Zapfens axial abgestützt ist. Diese Anordnung hat den Nachteil, daß sich die Ausdehnung des Getriebegehäuses in axialer Richtung um mindestens die Höhe des Gehäusezapfens gegenüber einer konventionellen Form vergrößert.

Um ein flach bauendes Gehäuse zu erhalten, schlägt daher die Erfindung, ausgehend von der EP 359 227 A2 vor, daß das drehbar gelagerte Schaltelement auf einer Lagerhülse, die am Getriebedeckel ausgebildet ist, gelagert ist, und daß sich die Abtriebwelle in die Hülse hinein erstreckt.

Diese Anordnung hat darüber hinaus den Vorteil, daß sich die Abtriebswelle unmittelbar am Gehäusedeckel abstützen kann. Zur Abtriebswelle gehört dabei auch der Teil des Abtriebszahnrades, der sich kappenartig über die Stirnfläche der Abtriebswelle erstreckt.

Der Gehäusedeckel besteht aus einer Grundplatte aus Metall, wobei die Lagerhülse aus Kunststoff besteht, der an die metallische Grundplatte angespritzt ist. Dabei wird der Teil der Grundplatte, an dem sich die Abtriebwelle abstützt, von Kunststoff freigehalten, so daß die Axialkräfte unmittelbar in die Grundplatte eingeleitet werden können, die unmittelbar am Getriebegehäuserand befestigt ist.

Auf der Außenseite der Grundplatte ist eine Kunststofflage vorgesehen, in der Leiterbahnen verlaufen, über die die punktförmigen Kontakte der Parkstellungsschalter sowie der angeschlossene Elektromotor mit Strom versorgt werden. Dabei bietet es sich an, die Lagerhülse einstückig mit dieser Kunststoffschicht auszubilden.

Das drehbare Schaltelement besteht aus einer Ringscheibe aus Kunststoff, deren Innenrand an der Mantelfläche der Lagerhülse anliegt. Dabei kann entweder die Außenseite der Lagerhülse oder die Innenkontur der Ringscheibe als Vieleck ausgebildet sein, so daß sich die Lagerhülse und die Ringscheibe nur punktuell berühren. In den Freiräumen zwischen den punktuellen Kontakten kann sich Schmiermittel ablagern. Auf der Seite der Ringscheibe, die dem Deckel zugewandt ist, sind die konzentrischen Kontaktbahnen ausgebildet.

Die Kontaktpunkte sind an Kontaktfahnen ausgebildet, die in etwa gleichmäßig über den Umfang der Ringscheibe verteilt sind, so daß der von den Zungen ausgeübte Druck auf die Ringscheibe zu keinem Kippmoment führt.

Die Kontaktfahnen sind an der Unterseite der Kunststoffschicht befestigt, wozu die metallische Grundplatte entsprechende langgestreckte Öffnungen aufweist, wodurch die Kunststoffschicht abschnittsweise nach unten hin freiliegt. Die Kontaktfahnen werden an diesen freiliegenden Stellen befestigt und mit den Leiterbahnen in der Kunststoffschicht verbunden.

Die Erfindung wird im folgenden anhand von zwei Figuren näher erläutert.

Dabei zeigen die
- Fig. 1: einen Querschnitt durch das Getriebe; und
- Fig. 2: eine Draufsicht auf die metallische Grundplatte des Getriebedeckels.

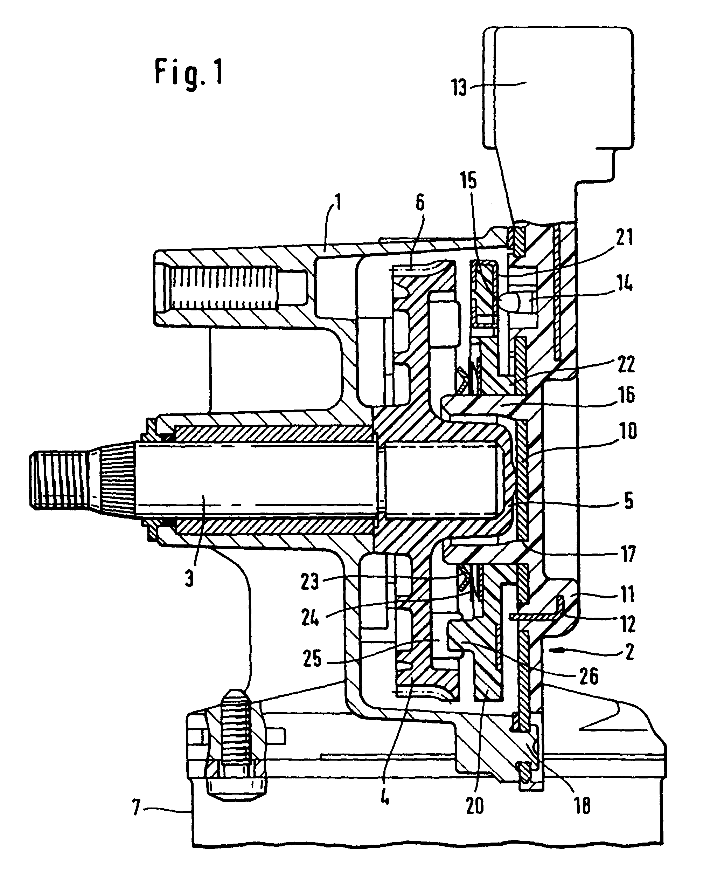

Zunächst wird auf die Fig. 1 Bezug genommen.

Die Fig. zeigt ein topfförmiges Gehäuse 1, dessen offene Seite durch einen Deckel 2 verschlossen ist. Durch den Boden des Gehäuses 1 erstreckt sich eine Abtriebswelle 3, auf deren Ende, das in das Gehäuse 1 hineinragt, ein Zahnrad 4 aus Kunststoff befestigt ist. Das Zahnrad 4 weist dabei einen kappenartigen Abschnitt 5 auf, der sich über die Stirnseite der Welle 3 erstreckt, die in das Gehäuse hineinragt. Das Zahnrad 4 entspricht in seiner radialen Ausdehnung in etwa dem Innendurchmesser des Gehäuses 1. In der Außenverzahnung 6 des Zahnrades kämmt eine Schnecke, die hier nicht dargestellt ist, und die in unmittelbarer Verlängerung der Ankerwelle des ebenfalls nicht dargestellten Motors 7 ausgebildet ist.

Der Deckel 2 besteht aus einer Grundplatte 10 und einer Kunststoffschicht 11, die sich im wesentlichen an der Außenseite der Grundplatte 10 erstreckt. In dieser Kunststoffschicht befinden sich flache Leiterbahnen 12, die einerseits mit einem Stecker 13 und andererseits mit Kontaktfedern 14 verbunden sind, von denen eine in der Fig. 1 dargestellt ist. Die Kontaktfedern 14 tragen an ihrem Ende einen punktförmigen Kontakt 15, der mit den Kontaktbahnen auf einer Kontakt- bzw. Ringscheibe 20 zusammenwirkt. An die Kunststoffschicht 11 schließt sich eine Lagerhülse 16 an, die sich in axialer Richtung in das Innere des Getriebegehäuses 1 erstreckt. Die Verbindung zwischen der Kunststoffschicht und der Lagerhülse 16 erfolgt durch mehrere Löcher 17 in der Grundplatte 10, die gleichmäßig auf einem Kreis entsprechend dem Durchmesser der Lagerhülse 16 angeordnet sind.

Das Ende der Lagerhülse 16, das dem Deckel zugewandt ist, wird dabei begrenzt durch die Grundplatte 10.

In den durch die Hülse und die Grundplatte 10 gebildeten Raum ragt das Ende der Welle 3 hinein, wobei dieses Ende durch einen kappenartigen Abschnitt des Zahnrades 4 überdeckt ist. An der Stirnseite dieser Kappe befindet sich eine Erhebung, die an der Grundplatte 10 abgestützt ist. Die Axialkräfte, die auf die Welle 3 wirken, werden auf diese Weise unmittelbar in die Grundplatte 10 eingeleitet, die in ihrem Randbereich unmittelbar mit dem Gehäuse 1 durch Schraubenoder Nietverbindungen 18 verbunden ist.

Auf die Außenseite der Lagerhülse 16 ist die Ringscheibe 20 aufgeschoben, wobei der Innendurchmesser der Ringscheibe 20 im wesentlichen, dem Außendurchmesser der Lagerhülse 16 entspricht. An der Fläche der Ringscheibe 20, die dem Deckel 2 zugewandt ist, sind einerseits leitende Kontaktbahnen 21 befestigt. Außerdem ist ein Ringsteg 22 an der Ringscheibe 20 ausgebildet, der an die Grundplatte 10 angelegt ist, und so einen axialen Anschlag für die Ringscheibe 20 bildet.

Die Ringscheibe 20 wird durch einen Klemmring 23 auf einer Lagerhülse 16 fixiert, wobei zwischen dem Klemmring 23 und der Ringscheibe 20 ein federnd nachgiebiger Wellring 24 und eine Unterlegscheibe angeordnet sind.

Der Innenrand der Ringscheibe 20 besitzt die Kontur eines Vielecks, wobei die linearen Verbindungsabschnitte zwischen den Ecken tangential an der Zylindermantelfläche der Hülse 16 anliegen. Die enstehenden Freiräume in den Ecken dienen der Aufnahme von Schmiermittel.

Um das Zahnrad 4 und die Ringscheibe 20 zu koppeln, weist sowohl das Zahnrad 4 als auch die Ringscheibe 20 jeweils eine Erhebung 25, 26 auf, die sich jeweils in axialer Richtung erstrecken und die mit jeweils einer Seitenfläche aneinander anliegen, wobei sich die Erhebung 26 der Ringscheibe 20 von der Erhebung 25 des Zahnrades 4 in der einen Drehrichtung entfernen kann.

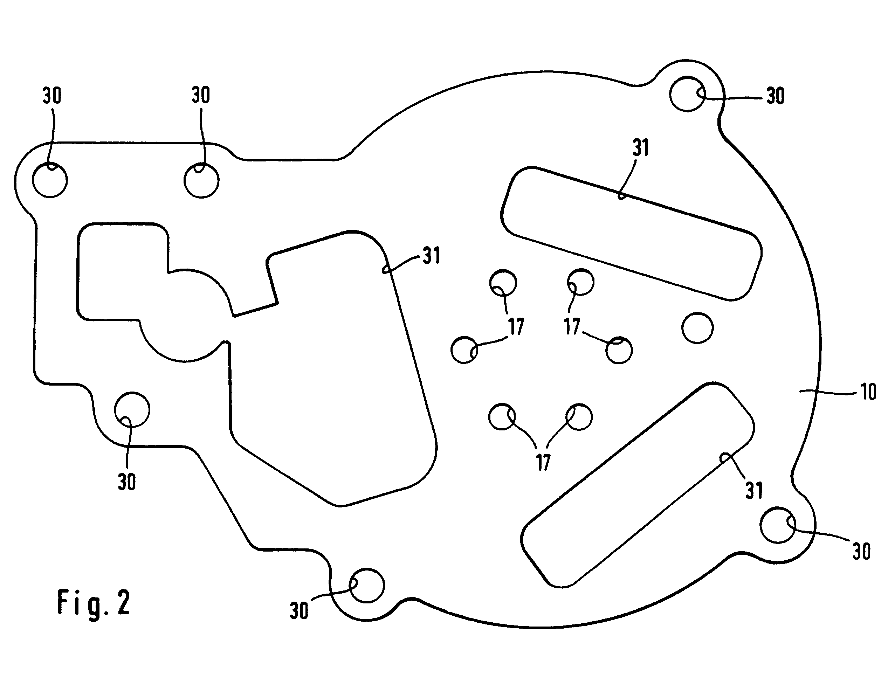

Die Fig. 2 zeigt die Grundplatte 10 des Deckels 2. Diese weist an ihrem Außenrand mehrere Löcher 30 auf, die als Schraub- oder Nietlöcher zum Verbinden der Grundplatte 10 mit dem Rand des Gehäuses 1 dienen. Im Zentrum der Grundplatte 10 erkennt man einen Kreis von sechs Löchern 17, die, wie schon erläutert, dazu dienen, daß die Kunststoffmasse, die die Lagerhülse 16 bildet, beim Spritzgießvorgang, hindurchtreten kann, so daß eine innige Verbindung zwischen der Hülse 16 und der Kunststoffschicht 11 entsteht.

Um das Zentrum herum sind Schlitze 31 vorgesehen, die sich in tangentialer Richtung erstrecken. Im Bereich der Schlitze 31 liegt die Kunststoffschicht 11 frei, so daß dort die Kontaktfedern 14, an deren freiem Ende die Kontaktpunkte 15 angeordnet sind, befestigt werden können, wobei gleichzeitig eine elektrisch leitende Verbindung zu den Leiterbahnen in der Kunststoffschicht 11 hergestellt wird.

## Patentansprüche

1. Antriebsvorrichtung für einen Scheibenwischer mit einer Abtriebswelle (3), einem Abtriebszahnrad (4), die in einem durch einen Gehäusedeckel (2) verschlossenen Gehäuse (1) angeordnet sind, einer Schaltvorrichtung, um einen mit dem Antriebszahnrad (4) trieblich gekoppelten Motor (7) unabhängig von der Betätigung eines Hauptschalters mit Strom versorgen zu können, bestehend aus ersten drehbar gelagerten Kontakten (21) und einem zweiten gehäusefest angeordneten Kontakt (14), wobei die drehbar gelagerten Kontakte (21) über eine Mitnahmeeinrichtung mit der Abtriebswelle (3) derart verbunden sind, daß bei einer Drehung der Abtriebswelle (3) in die eine Richtung die drehbar gelagerten Kontakte (21) mitgenommen und bei einer Drehung der Welle in die andere Richtung die drehbar gelagerten Kontakte (21) nicht mitgenommen werden, dadurch gekennzeichnet, daß am Gehäusedeckel (2) eine Lagerhülse (16) ausgebildet ist, die der Lagerung der drehbar gelagerten Kontakte (21) dient und daß sich die Abtriebswelle (3) in die Hülse (16) hinein erstreckt.

2. Antriebsvorrichtung nach Anspruch 1, dadurch gekennzeichnet, daß der Deckel (2) eine metallische Grundplatte (10) aufweist, an der sich die Abtriebswelle (3) abstützt.

3. Antriebsvorrichtung nach Anspruch 2, dadurch gekennzeichnet, daß an der Außenseite der Grundplatte (10) eine Kunststoffschicht (11) zur Aufnahme von elektrisch leitenden Metallbahnen (12) vorgesehen ist.

4. Antriebsvorrichtung nach Anspruch 3, dadurch gekennzeichnet, daß die Lagerhülse (16) einstückig mit der Kunststoffschicht (11) ausgebildet ist.

5. Antriebsvorrichtung nach einem der vorhergehenden Ansprüche, dadurch gekennzeichnet, daß die drehbaren Kontakte (21) auf einer Ringscheibe (20), die auf die Lagerhülse (16) aufgesteckt ist, als Kontaktbahnen ausgebildet sind.

6. Antriebsvorrichtung nach einem der Ansprüche 3 bis 5, dadurch gekennzeichnet, daß die Grundplatte (10) Löcher (17) aufweist, die von der Kunststoffschicht (11) überdeckt sind, wobei an der Unterseite der Kunststoffschicht (11), die über den Löchern (17) sich befindet bzw. in die Löcher (17) hineinragt, Kontaktfedern angeordnet sind, die elektrisch leitend mit den Leiterbahnen (12) in der Kunststoffschicht (11) verbunden sind, wobei die Kontaktfedern und die Leiterbahnen den gehäuse festen Kontakt (14) bilden.

7. Antriebsvorrichtung nach einem der Ansprüche 5 oder 6, dadurch gekennzeichnet, daß entweder die Außenseite der Lagerhülse (16) oder die Innenkontur der Ringscheibe (20) als Vieleck ausgebildet ist, so daß sich die Lagerhülse (16) und die Ringscheibe (20) nur punktuell berühren.

## Claims

1. A drive mechanism for a windshield wiper with an output shaft (3), an output gear (4), which are arranged in a housing (1) which is closed by a housing lid (2), a switch device for supplying the motor (7) which is coupled with the output gear (4) in driving connection with current independently of the actuation of a main switch, consisting of a first rotatably supported contact (21) and of a second contact (14) arranged fast with the housing, with the rotatably supported contacts (21) being connected with the output shaft (3) via an engaging device so that the rotatably supported contacts (1) are carried along upon a rotation of the output shaft (3) in the one direction and so that the rotatably supported contacts (21) are not carried along when the shaft rotates in the other direction, **characterised** in that, on the housing lid (2) a supporting sleeve (16) is formed which serves to support the rotatably supported contacts (21) and in that the output shaft (3) extends into the sleeve (16).

2. A drive mechanism as claimed in claim 1, **characterised** in that the lid (2) is provided with a metallic base plate (10) whereon the output shaft (3) supports itself.

3. A drive mechanism as claimed in claim 2, **characterised** in that a plastic layer (11) is provided on the outside of the base plate (10) for the reception of electrically conductive metal tracks (12).

4. A drive mechanism as claimed in claim 3, **characterised** in that the supporting sleeve (16) and the plastic layer (11) are designed in one piece.

5. A drive mechanism as claimed in any one of the preceding claims, **characterised** in that the rotatable contacts (21) are formed as contact paths on an annular disk (20) slipped onto the supporting sleeve (16).

6. A drive mechanism as claimed in one of the claims 3 to 5, **characterised** in that the base plate (10) is provided with apertures (17) covered by the plastic layer (11) and in that, on the bottom side of the plastic layer (11) which projects respectively across or into the apertures (17), contact springs are arranged which are connected with the conductive tracks (12) in the plastic layer (11) in an electrically conductive manner, wherein the contact springs and the conductive tracks form the contact (14) arranged fast with the housing.

7. A drive mechanism as claimed in one of the claims 5 or 6, **characterised** in that either the outside of the supporting sleeve (16) or the inside contour of the annular disk (20) is designed as a polygon so that the supporting sleeve (16) and the annular disk (20) touch each other only at certain points.

## Revendications

1. Dispositif d'entraînement pour un essuie-glace, comprenant un arbre de sortie (3) et un pignon de sortie (4), qui sont disposés dans un boîtier (1) fermé par un couvercle de boîtier (2), et un dispositif de commutation, destiné à alimenter en courant un moteur (7) accouplé en entraînement au pignon de sortie (4) indépendamment de l'actionnement d'un commutateur principal et constitué de premiers contacts (21) montés à rotation et d'un deuxième contact (14) solidaire du boîtier, les contacts (21) montés à rotation étant reliés au moyen d'un mécanisme entraîneur à l'arbre de sortie (3) de telle sorte qu'ils sont conjointement entraînés lors d'une rotation de l'arbre de sortie (3) dans une direction et ne sont pas conjointement entraînés lors d'une rotation de l'arbre dans l'autre direction, **caractérisé** en ce qu'une douille de palier (16) servant au montage des contacts (21) montés à rotation est formée sur le couvercle de boîtier (2), et en ce que l'arbre de sortie (3) s'étend à l'intérieur de la douille (16).

2. Dispositif d'entraînement selon la revendication 1, **caractérisé** en ce que le couvercle de boîtier (2) présente une plaque de base (10) métallique, contre laquelle s'appuie l'arbre de sortie (3).

3. Dispositif d'entraînement selon la revendication 2, **caractérisé** en ce qu'une couche de matière plastique (11) est prévue sur le côté extérieur de la plaque de base (10) pour recevoir des pistes métalliques (12) électriquement conductrices.

4. Dispositif d'entraînement selon la revendication 3, **caractérisé** en ce que la douille de palier (16) est réalisée d'un seul tenant avec la couche de matière plastique (11).

5. Dispositif d'entraînement selon l'une quelconque des revendications précédentes, **caractérisé** en ce que les contacts rotatifs (21) sont formés sous forme de pistes de contact sur une couronne (20) qui est emmanchée sur la douille de palier (16).

6. Dispositif d'entraînement selon l'une des revendications 3 à 5, **caractérisé** en ce que la plaque de base (10) présente des trous (17) qui sont recouverts par la couche de matière plastique (11), des ressorts de contact étant disposés sur le côté inférieur de la couche de matière plastique (11), qui se trouve au-dessus des trous (17) ou encore pénètre dans les trous (17), ressorts qui sont reliés en conduction électrique aux pistes conductrices (12) dans la couche de matière plastique (11), les ressorts de contact et les pistes conductrices formant le contact (14) solidaire du boîtier.

7. Dispositif d'entraînement selon la revendication 5 ou 6, **caractérisé** en ce que soit le côté extérieur de la douille de palier (16), soit le contour intérieur de la couronne (20) est réalisé polygonal, de sorte que la douille de palier (16) et la couronne (20) ne se touchent que de façon ponctuelle.
